# EUROPÄISCHE PATENTSCHRIFT

(11) **EP 3 071 874 B1**
(45) Veröffentlichungstag und Bekanntmachung des Hinweises auf die Patenterteilung: **06.12.2017**
(21) Anmeldenummer: 14781216.8
(22) Anmeldetag: 07.10.2014
(51) Int. Cl.: F17C 13/08, B60K 15/07, B60K 15/063

(54) **ANORDNUNG EINES DRUCKGASTANKS IN EINEM ZWEISPURIGEN KRAFTFAHRZEUG**
ARRANGEMENT OF A PRESSURIZED GAS TANK IN A TWO-TRACK MOTOR VEHICLE
AGENCEMENT D'UN RÉSERVOIR DE GAZ COMPRIMÉ DANS UN VÉHICULE AUTOMOBILE À DEUX RANGÉES DE ROUES

(30) Priorität: 21.11.2013 DE 102013223767
(43) Veröffentlichungstag der Anmeldung: 28.09.2016
(73) Patentinhaber: Bayerische Motoren Werke Aktiengesellschaft, 80809 München (DE)
(72) Erfinder: SCHOTT, Stefan, 80997 München (DE); STRASSENBERGER, Albert, 94431 Pilsting (DE)
(86) Internationale Anmeldenummer: PCT/EP2014/071463
(87) Internationale Veröffentlichungsnummer: WO 2015/074799

(56) Entgegenhaltungen:
- WO-A2-2006/057765
- DE-A1-102010 024 212
- DE-A1-102012 011 612
- JP-A- 2011 226 608
- US-A1- 2002 171 236
- US-A1- 2003 006 349

## Beschreibung

Die Erfindung betrifft eine Anordnung eines Druckgastanks in einem zweispurigen Kraftfahrzeug nach dem Oberbegriff des Anspruchs 1.. Zum Stand der Technik wird hinsichtlich der Anordnung von Gastanks in Kraftfahrzeugen auf die Schriften DE 199 35 517 B4, DE 102 39 501 A1, EP 1 373 002 B1 sowie DE 10 2007 046 059 B4 verwiesen und hinsichtlich einer Fahrzeug-Fahrschemelstruktur mit vorliegend sog. Achsmodulträgern beispielsweise auf die EP 1 175 328 B1. Als nächstkommender Stand der Technik wird die DE 10 2012 011 612 A1 erachtet.

Für die Anordnung eines Druckgastanks in einem Kraftfahrzeug, in welchem Druckgastank ein Kraftstoff, bspw. Wasserstoff, zur direkten oder indirekten Versorgung eines Fzg.-Antriebsaggregats gespeichert ist, sind verschiedenste Ausführungsformen bekannt. Am weitesten verbreitet ist ein Quereinbau im Bereich der Fahrzeug-Hinterachse, so wie dies bspw. in der DE 102 39 501 A1 oder in der DE 10 2012 011 612 A1 gezeigt ist. Alternativ kann sich ein Gastank mit seiner größten Abmessung wie bspw. in der WO 2006/057765 A2 oder in der EP 1 373 002 B1 für einen Flüssiggastank gezeigt aber auch in Fzg.-Längsrichtung erstrecken, wobei in diesem Zusammenhang darauf hingewiesen sei, dass die in jüngerer Zeit in Entwicklung befindlichen Kryodrucktanks ebenfalls unter den Begriff eines Druckgastanks fallen sollen.

In der eingangs weiterhin genannten DE 10 2007 046 059 B4 ist eine sich abermals in Fzg.-Querrichtung erstreckende Tankanordnung gezeigt, welche ausgelegt ist, um Lasten vom Fzg.-Aufbau oder einem Rahmen während der Fahrt und/oder während eines Zusammenstoßes oder eines Aufprallereignisses zu tragen bzw. diesen standzuhalten. Dabei können ansonsten vorhandene Querträger entweder dünner gestaltet werden oder sogar vollständig entfallen, indem der Tank deren Funktion zumindest anteilig übernimmt, so dass eine Reduzierung des Fzg.-Gesamtgewichts möglich ist. Wie im übrigen Haltebügel oder dgl. am Tank (Druckgastank) derart befestigt sein können, dass dieser Tank die Funktion eines Träger zumindest anteilig übernehmen kann, ist bspw. in der eingangs weiterhin genannten DE 199 35 517 B4 gezeigt.
In der bereits genannten nächstkommenden DE 10 2012 011 612 A1 ist insbesondere vorgeschlagen, einen in seinen beiden Endabschnitten gelagerten und wie üblich annähernd zylindrischen Druckgastank solchermaßen zu lagern, dass eines der beiden Lager ein Festlager und das andere ein Loslager ist, welches geringfügige Längenänderungen des Druckgastanks, welche sich aufgrund unterschiedlichen Befüllgrads und damit aufgrund unterschiedlicher Innendrücke innerhalb des Tanks einstellen, ausgleichen kann.
Hiermit soll nun eine vorteilhafte Anordnung eines auch Lasten im Fahrwerksbereich übertragenden Druckgastanks in einem zweispurigen Kraftfahrzeug aufgezeigt werden, welche ein hohes Einsparungspotential hinsichtlich des Fahrzeug-Gesamtgewichts besitzt (= Aufgabe der vorliegenden Erfindung).
Die Lösung dieser Aufgabe besteht in einer Druckgastank-Anordnung mit den Merkmalen des Anspruchs 1. Zunächst ist also vorgeschlagen, den Druckgastank in Fahrzeug-Längsrichtung zu verbauen, wodurch es grundsätzlich möglich ist, dass der Druckgastank als eine mechanische Struktur fungiert, welche Kräfte und Momente übertragen kann, und zwar zwischen der vorderen und der hinteren Trägerstruktur für den Druckgastank. Hierfür ist der Druckgastank in diesen beiden Trägerstrukturen drehmomentsteif gelagert. Weiterhin ist erfindungsgemäß an diesen Trägerstrukturen nicht nur der Fahrzeug-Aufbau direkt oder indirekt abgestützt, sondern es sind an diesen beiden Trägerstrukturen auch Radführungs-Elemente für die beiden Räder der Vorderachse (im Falle der in Fahrzeug-Fahrtrichtung vorderen Trägerstruktur) bzw. der Hinterachse (im Falle der in Fahrzeug-Fahrtrichtung hinteren Trägerstruktur) des Fahrzeugs befestigt. Insofern ist vorliegend eine Konstruktion ähnlich der eingangs genannten EP 1 175 328 B1 vorgeschlagen, mit einer Fahrschemelstruktur eines Personenkraftwagens mit einem Vorderachsmodul und einem Hinterachsmodul, welche über ein Zentralrohr, dessen Funktion nach vorliegender Erfindung dann der Druckgastank übernimmt, ausreichend steif miteinander verbunden sind. Als Fahrschemel werden bekanntlich Achsträger bezeichnet, an denen insbesondere radführende Lenker oder dgl. des Fahrzeug-Fahrwerks angelenkt sind. Auch um keine Festlegung hinsichtlich einer bestimmten Ausgestaltung zu treffen, werden vorliegend die hier quasi deren Funktion übernehmenden beiden Trägerstrukturen des Druckgastanks auch als Achsmodulträger bezeichnet.

Nach einer vorteilhaften Ausgestaltung ist der Druckgastank über an diesem vorgesehene Befestigungselemente im Bereich der Fahrzeug-Hinterachse starr und im Bereich der Fahrzeug-Vorderachse über in Fahrzeug-Längsrichtung elastische Lagerelemente am jeweiligen Achsmodul gelagert.

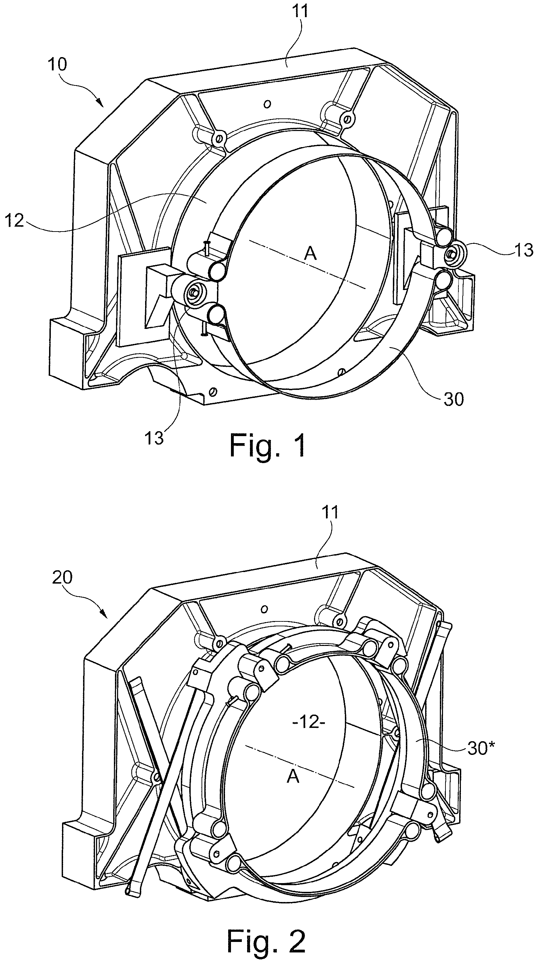

Zur näheren Beschreibung wird auf die beigefügten Figuren 1, 2, verwiesen, welche einen vorderen Achsmodulträger 10 in **Figur 1** und einen hinteren Achsmodulträger 20 in **Figur 2** jeweils in perspektivischer Darstellung (bei Betrachtung im Fahrzeug von schräg hinten in Fahrtrichtung blickend) ausdrücklich nur in Form eines im weiteren auf das Wesentliche beschränkt erläuterten Beispiels zeigen; irgendwelche Schutzumfangs-Beschränkungen auf diese figürlich dargestellten Ausführungsbeispiele ergeben sich hierdurch nicht. Nicht dargestellt ist in diesen Figuren der Druckgastank selbst; vielmehr sind lediglich Befestigungselemente 30, 30* gezeigt, über welche der Druckgastank am vorderen Achsmodulträger 10 bzw. am hinteren Achsmodulträger 20 in erfindungsgemäßer Weise befestigt ist. Dabei ist jedes Befestigungselement 30, 30* vorliegend in Form eines Spannrings oder dgl. (hierfür wird ebenfalls die Bezugsziffer 30 bzw. 30* verwendet) ausgebildet, welcher den jedenfalls im Angriffsbereich des Befestigungselements 30, 30* kreiszylindrischen Druckgastank außenseitig umfasst, d.h. die Zylinder-Achse A jedes seinerseits kreiszylindrischen Spannrings 30, 30* fällt mit der Zylinder-Achse A des wie üblich in Richtung seiner größten Abmessung ebenfalls kreiszylindrischen Druckgastanks zusammen. Diese Zylinder-Achse A erstreckt sich in Richtung der Fahrzeug-Längsachse.

Jeder Achsmodulträger 10, 20, an welchem in den Figuren nicht dargestellte Radführungs-Elemente für die beiden Räder der jeweiligen Achse, welche bspw. wie üblich in Form von Lenkern ausgeführt sind, befestigt sind, besteht jedenfalls gemäß vorliegendem Ausführungsbeispiel aus einer sich im wesentlichen in Fzg.-Querrichtung sowie in Richtung der Fzg.-Hochachse erstreckenden Rahmenstruktur 11 oder dgl., in welcher ein bezüglich der genannten Zylinder-Achse A kreiszylindrischer Durchbruch 12 vorgesehen ist, durch den hindurch sich der Druckgastank erstreckt. Am hinteren Achsmodulträger 20 ist der Spannring 30* auf nicht detailliert erläuterte Weise starr befestigt und somit bezüglich dieses Achsmodulträgers 20 hinsichtlich sämtlicher Freiheitsgrade festgelegt, was folglich auch für den an diesem hinteren Spannring 30* befestigten Druckgastank gilt. Abweichend hiervon ist der vordere Spannring 30 bzw. das vordere Befestigungselement 30 am vorderen Achsmodulträger 10 teilelastisch gelagert, derart, dass der Druckgastank bezüglich seiner Zylinder-Achse A und somit auch bezüglich der Fahrzeug-Längsachse drehmomentsteif gelagert ist, während in Richtung der Fzg.-Längsachse bzw. der Zylinder-Achse A betrachtet über hier zwei figürlich nicht vollständig detailliert dargestellte teilelastische Lagerstellen 13 ein Längenausgleich möglich ist. Hierfür weist jede teilelastische Lagerstelle 13 ein geeignet ausgebildetes und geeignet befestigtes Gummilager auf, welches in Fzg.-Querrichtung sowie in Richtung der Fzg.-Hochachse ausreichend steif ist um die besagte drehmomentsteife Lagerung darzustellen, während zum Längenausgleich des mit unterschiedlicher Befüllung eine geringfügig unterschiedliche Längenabmessung in Richtung der Zylinder-Achse A aufweisenden Druckgastanks diese teilelastische Lagerung solche Längenausdehnungen oder Verkürzungen des Druckgastanks aufnehmen kann. Indem diese teilelastische Lagerung nicht am hinteren Achsmodulträger 20 vorgesehen ist, kann der Druckgastank am hinteren Achsmodulträger 20 bspw. im Hinblick auf einen Heckcrash des Fahrzeugs möglichst starr gelagert sein.

Indem aufgrund der drehmomentsteifen Lagerung oder Anordnung des Druckgastanks dieser Druckgastank Kräfte und Momente zwischen den beiden Achsmodulen 20 übertragen kann, ist für diese für das exakte Fahrverhalten eines diese Achsmodule aufweisenden Kraftfahrzeugs notwendige Kraft- und Momentenübertragung entweder keine weitere Verbindungsstrebe oder dgl. zwischen diesen Achsmodulen 10, 20 oder zumindest eine gegenüber einer Ausführungsform ohne eine solche Druckgastank-Anordnung erheblich weniger massive Verbindungsstrebe zwischen diesen beiden Achsmodulen 10, 20 erforderlich.

## Patentansprüche

1. Anordnung eines Druckgastanks in einem zweispurigen Kraftfahrzeug, der mittels Trägern derart gelagert ist, dass ein Längenausgleich im Hinblick auf eine geringe Längenänderung des Druckgastanks möglich ist und wobei diese Träger mit dem Fahrzeug-Aufbau verbunden sind, **dadurch gekennzeichnet, dass** der Druckgastank in Fahrzeug-Längsrichtung eingebaut ist und damit in dieser Richtung eine größere Abmessung als in Fahrzeug-Querrichtung oder in Richtung der Fahrzeug-Hochachse aufweist, und bezüglich der Fahrzeug-Längsachse drehmomentsteif über Spannringe, die den in deren Bereich kreiszylindrischen Druckgastank außenseitig umfassen, an zwei Trägern befestigt ist, welche Träger zusätzlich als Achsmodulträger (10, 20) fungieren, auf denen der Fahrzeug-Aufbau direkt oder unter funktionaler Zwischenschaltung indirekt abgestützt ist, und wobei an jedem Achsmodulträger (10, 20) Radführungs-Elemente für die beiden Räder der Vorderachse oder der Hinterachse des Fahrzeugs befestigt sind.

2. Druckgastank-Anordnung nach Anspruch 1, wobei der Druckgastank im Bereich der Fahrzeug-Hinterachse und somit am hinteren Achsmodulträger (20) starr und im Bereich der Fahrzeug-Vorderachse und somit am vorderen Achsmodulträger (10, 20) über in Fahrzeug-Längsrichtung elastische Lagerelemente gelagert ist.

## Claims

1. An arrangement of a pressurised gas tank in a two-track motor vehicle, which tank is rotatably mounted by means of supports in such a way that a length compensation in respect of a small change in length of the pressurised gas tank is possible, and wherein these supports are connected to the vehicle structure, **characterised in that** the pressurised gas tank is installed in the vehicle longitudinal direction and thus has a larger dimension in this direction than in the vehicle transverse direction or in the direction of the vehicle vertical axis, and is secured in a torsionally rigid manner relative to the vehicle longitudinal axis on two supports via clamping rings that externally encompass the circular-cylindrical pressurised gas tank in the region of said rings, which supports additionally function as axle module supports (10, 20), on which the vehicle structure is supported directly or indirectly with functional interconnection, and wherein wheel-guiding elements for the two wheels of the front axle or the rear axle of the vehicle are fastened to each axle module support (10, 20).

2. A pressurised gas tank arrangement according to claim 1, wherein the pressurised gas tank is rigidly mounted in the region of the vehicle rear axle and thus on the rear axle module support (20) and is mounted in the region of the vehicle front axle and thus on the front axle module support (10, 20) via bearing elements that are resilient in the vehicle longitudinal direction.

## Revendications

1. Agencement d'un réservoir de gaz comprimé dans un véhicule à deux rangées de roues qui est monté au moyen de supports de façon à permettre une compensation de longueur compte tenu d'une faible variation de longueur du réservoir de gaz comprimé, ces supports étant reliés à la carrosserie du véhicule,
**caractérisé en ce que**
le réservoir de gaz comprimé est monté dans la direction longitudinale du véhicule, et a ainsi dans cette direction, une plus grande dimension que dans la direction transversale du véhicule ou dans la direction de l'axe vertical du véhicule, et est fixé, sur deux supports de façon rigide en torsion par rapport à l'axe longitudinal du véhicule au moyen d'anneaux de serrage qui entourent extérieurement le réservoir de gaz comprimé qui est de forme cylindrique circulaire dans cette zone, ces supports constituant en outre des supports de module d'essieu (10, 20) sur lesquels s'appuie la carrosserie du véhicule, directement ou indirectement par des organes de liaison intermédiaires fonctionnels, et, sur chaque support de module d'essieu (10, 20) étant fixés des éléments de guidage de roues pour les deux roues de l'essieu avant ou de l'essieu arrière du véhicule.

2. Agencement de réservoir de gaz comprimé conforme à la revendication 1 dans lequel le réservoir de gaz comprimé est monté rigide dans la zone de l'essieu arrière du véhicule et ainsi sur le support de module d'essieu arrière (20), et par l'intermédiaire d'éléments de paliers élastiques dans la direction longitudinale du véhicule dans la zone de l'essieu avant de ce véhicule et ainsi sur le support de module d'essieu avant (10, 20).
